(19) Europäisches Patentamt
European Patent Office
Office européen des brevets

(11) **EP 2 288 836 B1**

(12) **EUROPÄISCHE PATENTSCHRIFT**

(45) Veröffentlichungstag und Bekanntmachung des Hinweises auf die Patenterteilung:
**29.05.2013   Patentblatt 2013/22**

(21) Anmeldenummer: **09779782.3**

(22) Anmeldetag: **16.06.2009**

(51) Int Cl.:
*F16L 37/088* (2006.01)    *F16L 37/098* (2006.01)
*F16L 37/14* (2006.01)    *F16L 41/02* (2006.01)
*F16L 47/24* (2006.01)    *F16L 43/00* (2006.01)

(86) Internationale Anmeldenummer:
**PCT/EP2009/057435**

(87) Internationale Veröffentlichungsnummer:
**WO 2010/009942 (28.01.2010 Gazette 2010/04)**

(54) **VERBINDER FÜR FLUID-LEITUNGEN**

CONNECTOR FOR FLUID LINES

RACCORD POUR CONDUITES FLUIDIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.07.2008   DE 202008009931 U**

(43) Veröffentlichungstag der Anmeldung:
**02.03.2011   Patentblatt 2011/09**

(73) Patentinhaber: **Voss Automotive GmbH
51688 Wipperfürth (DE)**

(72) Erfinder:
• **LECHNER, Martin
51789 Lindlar (DE)**
• **HAGEN, Harald
51688 Wipperfürth (DE)**

(74) Vertreter: **Patentanwälte
Dr. Solf & Zapf
Schlossbleiche 20
42103 Wuppertal (DE)**

(56) Entgegenhaltungen:
**EP-A1- 0 703 398     EP-A2- 0 005 865
WO-A1-96/17202     US-A- 4 186 946**

**Beschreibung**

Die vorliegende Erfindung betrifft einen Verbinder für Fluid-Leitungen und -Aggregate, mit mindestens zwei Anschlussbereichen für Rohr- oder Schlauchleitungen oder Fluid-Aggregate und mit einem Übergangsbereich zwischen den Anschlussbereichen, wobei jeder Anschlussbereich und der Übergangsbereich jeweils von einem Innenkanal durchsetzt ist und mindestens ein Anschlussbereich als Dorn ausgebildet ist nach dem Oberbegriff des Anspruchs 1.

In diesem Zusammenhang ist der Begriff "Fluid" als beliebiges, flüssiges und/oder gasförmiges Strömungs- bzw. Druckmittel zu verstehen. Somit eignet sich ein derartiger Verbinder sowohl für hydraulische als auch für pneumatische sowie für hydropneumatische Anwendungen. Ein bevorzugtes Anwendungsgebiet der erfindungsgemäßen Steckverbindung ist aber die Verbindung von Kraftstoffleitungen in Kraftfahrzeugen.

Verbinder der genannten Art sind im praktischen Einsatz weithin verbreitet und werden bekanntermaßen einstückig entweder aus Metall, wie aus Messing, oder aus Kunststoff wie aus PA 6.6 oder PA 12, hergestellt. Sie dienen, insbesondere in einem Kraftfahrzeug, zum Verbinden von mindestens zwei Medienleitungen untereinander oder zur Anschlussverbindung mindestens einer Leitung an ein beliebiges Aggregat. In einer Vielzahl von Fällen handelt es sich jeweils um gewinkelte Verbinder, die beispielsweise als Spritzformteile ausgeführt sind. Die dem Anschluss dienenden Endabschnitte des Verbinders können dabei bezüglich ihrer Längsachse in einem Verbinderwinkel zwischen 0° und 180° zueinander ausgerichtet sein.

Einen ähnlichen Verbinder, wie den der eingangs genannten Art beschreiben die WO 2007/046712 A1 und die EPO 005865 B1. Insbesondere wird dort ein einstückiger Steckverbinder beschrieben, der einen als Dorn ausgebildeten Anschlussbereich aufweist und anderseitig durch Herstellung einer Steckverbindung in einem Aggregat montierbar ist. Die die beiden Anschlussbereiche und den Übergangsbereich jeweils durchsetzenden Innenkanäle, sind dabei durch eine einzige durchgehende Längsbohrung gebildet. Es wird ausgeführt, dass der Steckverbinder vorteilhafterweise aus Kunststoffverbundmaterialien bestehen und die Bohrung einen Durchmesser von weniger als 12 mm aufweisen kann. Der als Dom ausgebildete Anschlussbereich wird durch eine spezielle Schildstruktur geschützt. Auf den Dom eines derartigen Verbinders kann insbesondere eine schlauchartige Leitung aufgezogen, aber auch ein Rohr aufgepresst werden. Entsprechend der vorgegebenen geometrischen Dimensionierung der anzuschließenden Leitung, wie z. B. der Nennweite, ist dabei das äußere Domprofil, insbesondere ein Außendurchmesser des Dornes, festgelegt.

Durch die notwendige Wandstärke des Dornes, die unter Berücksichtigung der geforderten Festigkeit, insbesondere zur Gewährleistung einer erforderlichen Knick- und Schlagsicherheit, festzulegen ist, ergibt sich dann der Innenquerschnitt des Dornes, insbesondere ein Durchmesser des Innenkanals des Domes.

Da die erforderliche Wandstärke bei Einsatz von Metall aufgrund seiner größeren Festigkeit in der Regel geringer ist als bei Einsatz von Kunststoff, kann ein aus Metall gefertigter Dom bei gleichem Außenquerschnitt einen größeren Innenquerschnitt aufweisen als ein Kunststoffdorn. Unter materialökonomischen Gesichtspunkten, vor allem unter Berücksichtigung der hohen Preise von Messing im Vergleich mit Polyamid, besteht dabei die Forderung, von dieser Möglichkeit einer geringeren Wandstärke bei metallischen Verbindern auch Gebrauch zu machen. Allerdings ist dabei zu beachten, dass sich die Strömungsverhältnisse des den Verbinder durchströmenden Fluids verändern. Dornprofil und Werkstoffauswahl wirken somit limitierend auf das Strömungsverhalten.

Verbinder der genannten Art sollen hinsichtlich der Strömungsverhältnisse des den Verbinder durchströmenden Fluids derart konzipiert sein, dass sie nur einen geringen Strömungswiderstand aufweisen. Dieser drückt sich insbesondere in einem dimensionslos angegebenen Druckverlustbeiwert $\xi$ aus. Je kleiner dieser ist, desto besser sind die Strömungsverhältnisse im Verbinder.

Bei Kunststoffverbindern ist vorteilhafterweise eine Fertigung in technologisch wenig aufwändiger Weise - nämlich spanlos - möglich, wobei beim Spritzgießen eine strömungsoptimierte Oberfläche und Form des Innenquerschnitts ausgebildet werden kann, die insbesondere auch in Winkelverbindem keine scharfkantigen Konturen aufweist, die später durch Strömungsablösungen, Turbulenzen, Sekundär- und Rückströmungen usw. im Strömungsmedium Druckverluste verursachen könnten und den Druckverlustbeiwert $\xi$ erhöht. Zwar können auch metallische Verbinder spanlos, nämlich als Druckgussteil, z. B. aus Aluminium, Messing, Kupfer oder dergleichen, hergestellt werden, jedoch sind dabei nachteiligerweise höhere Arbeitstemperaturen und damit ein höherer Energieeinsatz als beim Kunststoffspritzgießen verbunden.

Ein Kriterium für die Ausbildung eines strömungsoptimierten Verbinder-Innenquerschnitts ist auch die Erzielung eines möglichst laminaren Strömungsverlaufs. Dieser liegt bei einer Rohrströmung dann vor, wenn die dimensionslose sogenannte Reynolds-Zahl

$$Re = \rho * v * d / \eta,$$

welche ein Maß für das Verhältnis der Trägheitskräfte zu den Zähigkeitskräften im Strömungsmedium darstellt, kleiner ist als die sogenannte kritische Reynolds-Zahl $Re_{krit}$.

Hierbei sind

$\rho$ - die charakteristische Dichte des Fluids in kg m$^{-3}$.

$v$ - der Betrag der für den Anwendungsfall charakteristischen mittleren Strömungsgeschwindigkeit in m s$^{-1}$,

d - der Durchmesser des Innenkanals in m und

$\eta$ - die charakteristische dynamische Viskosität des Fluids in kg s$^{-1}$ m$^{-1}$.

Die kritische Reynolds-Zahl $Re_{krit}$ wird durch die Gestaltung des Innenkanals des Verbinders bestimmt und ist somit wie der dimensionslose Druckverlustbeiwert $\xi$ eine Eigenschaft des Verbinders.

Die Reynolds-Zahl Re wird durch die Parameter des strömenden Fluids bestimmt und ist somit keine konstruktive, sondern ein Prozessgröße, wobei unter Beachtung der obigen Ausführungen jedoch zu bemerken ist, dass ein bei einem metallischen Verbinder vorliegender größerer Innenquerschnitt im strömenden Medium zu einer optimal kleineren Reynolds-Zahl Re führt als die, welche bei einem Kunststoffverbinder mit kleinerem Innenquerschnitt auftritt. Dies ist dadurch bedingt, dass ein kleinerer Innenquerschnitt bei einer bestimmten Durchsatzmenge an Fluid zu einer überproportional zum Durchmesser des Innenkanals ansteigenden Strömungsgeschwindigkeit des Fluids führt.

Zusammenfassend haben aufgrund der geringeren erforderlichen Wandstärke des Dornes metallische Verbinder Vorteile im Hinblick auf eine optimale Ausbildung der Fluidströmung im Betriebszustand, denen jedoch ein nachteilhaft höherer fertigungstechnischer bzw. materialökonomischer Aufwand gegenübersteht, welcher sich in höheren Kosten ausdrückt. Für Kunststoffverbinder ergeben sich Vorteile im Hinblick auf eine technologisch und materialökonomisch günstigere Fertigung, die sich in einem niedrigeren Preis ausdrückt, denen jedoch für eine bestimmte Nenngröße Nachteile aufgrund der erforderlichen höheren Wandstärke des Dornes hinsichtlich einer unter strömungstechnischen Gesichtspunkten optimalen Gestaltung des Querschnitts des Innenkanals des Dornes gegenüberstehen.

Es sind für Fluid-Leitungen und -Aggregate auch Verbinder anderer Art bekannt, bei denen kein Anschlussbereich als Dorn ausgebildet ist. Solche, beispielsweise aus der WO 2007/121794 A1, der DE 100 05 870 A1 und der DE 10 2005 027 816 A1 bekannten Systeme sind insbesondere für ein direktes Stecken konzipiert, d. h. der Verbinder wird, vorzugsweise durch Einschrauben oder aber auch durch Herstellung einer Steckverbindung in einem Aggregat montiert, und ein abgelängtes Rohr wird dann durch Einstecken direkt im Verbinder befestigt.

So beschreibt die WO 2007/121794 A1 einen Steckverbinder für insbesondere aus Kunststoff bestehende Rohrleitungen, bestehend aus einem Gehäuseteil mit einer Steckaufnahme für eine Mediendichtung zum mediendichten Einstecken eines rohrstückförmigen Einsteckteils und für mindestens ein Halteelement zum Arretieren des Einsteckteils, wobei das Gehäuseteil zweiteilig aus einem Aufnahmeteil für das Halteelement und die Mediendichtung sowie aus einem Anschlussteil zur Anschlussverbindung des Gehäuseteils an ein Aggregat besteht und gegenüber dem Aggregat abdichtbar ist. Das Anschlussteil ist ein Schraubteil mit einem Außengewinde zum Eindrehen in das Aggregat.

Dieser Steckverbinder weist gegenüber vorbekannten mehrteiligen Steckverbindern eine vereinfachte Abdichtung auf, was erreicht wird, indem das Gehäuseteil derart geteilt ist, dass das Aufnahmeteil unmittelbar gegenüber dem Aggregat abdichtbar ist. Bei diesem Steckverbinder kann vorgesehen sein, dass das mit dem Aufnahmeteil des Gehäuseteiles verbindbare Anschlussteil des Gehäuseteiles aus Metall, vorzugsweise aus Messing, und das Aufnahmeteil des Gehäuses aus Kunststoff besteht.

Aus der DE 100 05 870 A1 ist ein Rohrverbinder bekannt, der beispielsweise ein unter Druck stehendes Fluid über einen Durchgang zuführen oder abführen kann, indem der Rohrverbinder beispielsweise mit einer fluiddruckbetätigten Vorrichtung, wie einem Zylinder, gekoppelt und verbunden wird. Der bekannte Rohrverbinder weist einen Verbindungskörper mit einem Rohrverbindungsmechanismus zum Befestigen und Lösen eines Rohres und mit einem in seinem Inneren ausgebildeten ersten Durchgang zur Herstellung einer Verbindung mit dem Rohr auf. Des Weiteren weist der bekannte Rohrverbinder ein Kopplungselement auf, das mit dem Verbindungskörper verbunden ist und einen zweiten Durchgang aufweist, der mit dem ersten Durchgang in Verbindung steht.

Der Verbindungskörper und das Kopplungselement bestehen jeweils aus einem Kunstharzmaterial oder dergleichen. Im Gegensatz zu dem Aufnahmeteil und dem damit verbindbaren Anschlussteil des Gehäuseteiles des aus der WO 2007/121794 A1 bekannten Steckverbinders ist hier eine Fertigung von Verbindungskörper und Kopplungselement aus unterschiedlichen Werkstoffen nicht vorgesehen.

Um zu erreichen, dass eine Aufweitung eines ebenfalls vorhandenen Dichtungselements beim Einsetzen des Rohres in den Verbinder vermieden wird und um ein einfaches Einsetzen eines Rohres zu ermöglichen, ist dabei vorgesehen, dass der Rohrverbindungsmechanismus einerseits ein solches Dichtungselement aufweist, das durch Umgeben einer äußeren Umfangsfläche des einzusetzenden Rohres abdichtet, und dass er andererseits ein Stopperelement zur Verhinderung einer Gleitbewegung des Dichtungselements aufweist, in dem das Dichtungselement befestigt wird.

Das Kopplungselement wird mit einem äußeren Gewindeabschnitt in einen Anschluss einer fluiddruckbetätigten Vorrichtung eingeschraubt. Anderseitig ist zum Anschluss des Kopplungselementes an den Verbindungskörper vorgesehen, dass eine zylindrische Hülse zwischen den Verbindungskörper und das Kopplungselement eingesetzt ist, dass ein erster ringförmiger Vorsprung zum Einsetzen in eine erste Befestigungsnut des Kopplungselements an einer inneren Umfangswand der Hülse ausgebildet ist, und dass ein zweiter ringförmiger Vorsprung zum Einsetzen in eine zweite Befestigungsnut des Verbindungskörpers an einer äußeren Umfangsfläche der Hülse ausgebildet ist. Der Querschnitt des im Kopplungselement vorhandenen zweiten Durchgangs ist im Befestigungsbereich gegenüber einem Eingangsbereich, wo der Anschluss der fluiddruckbetätigten Vorrichtung erfolgt, verjüngt, so dass er nahezu durchmessergleich an den ersten Durchgang im Verbindungskörper anschließt.

Des Weiteren ist aus der DE 10 2005 027 816 A1 ein ähnlicher Rohrverbinder bekannt. Dieser umfasst einen aus einem Kunststoff oder Kunstharzmaterial bestehenden, zylindrisch geformten Körper, der zu einer im Wesentlichen L-förmigen Gestalt gebogen ist und in den ein Fluidrohr eingesetzt wird. Der Körper ist nicht dahingehend eingeschränkt, dass er aus einem Kunststoff- oder Kunstharzmaterial hergestellt sein muss; er kann auch aus einem metallischen Material hergestellt sein.

Des Weiteren umfasst der Rohrverbinder eine Klemme, die in dem Körper vorgesehen ist und das Fluidrohr in dem Körper durch Eingriff mit einer äußeren Umfangsfläche des Fluidrohres hält, außerdem ein zylindrisches Führungselement, das zwischen dem Körper und einer äußeren Umfangsfläche der Klemme vorgesehen ist, und schließlich ein Ringelement, das aus einem metallischen Material besteht und relativ zu dem Führungselement radial außen vorgesehen ist, wobei der Körper zwischen dem Ringelement und dem Führungskörper vorgesehen ist und wobei die Klemme an dem Führungselement anliegt, um das Führungselement radial nach außen zu pressen, wenn das Fluidrohr in einer Richtung weg von dem Körper gezogen wird.

An der für die Aufnahme des Fluidrohres gegenüberliegenden Endseite des Körpers ist ein Verbindungsabschnitt ausgebildet, an dem ein zylindrisches Verbindungselement mit einem Durchgang, durch welchen ein Fluid fließen kann, angebracht ist. Das Verbindungselement, für das nicht angegeben ist, aus welchem Material es besteht, ist ein Schraubteil mit einem Außengewinde zum Eindrehen in eine fluiddruckbetätigte Vorrichtung, wie einen Zylinder. Ein Eingriffsvorsprung, der so vorsteht, dass sich ein scharfer Querschnitt ergibt, ist an der äußeren Umfangsfläche des Verbindungselements ausgebildet, und zwar an einer Endseite, die in den Körper eingesetzt wird. Der Eingriffsvorsprung tritt in Eingriff mit einer inneren Umfangfläche des Verbindungsabschnitts des Körpers. Dementsprechend wird das Verbindungselement integral an dem Körper in einem Zustand angebracht, der ein Lösen des Verbindungselementes von dem Körper verhindert. Ein Band- oder Schellenelement, welches die Verbindung zwischen dem Verbindungsabschnitt und dem Verbindungselement festzieht, ist an der äußeren Umfangsfläche des Verbindungsabschnitts angebracht. Ein O-Ring ist in einer Ringnut an der äußeren Umfangsfläche des Verbindungselements angebracht. Der O-Ring liegt an der inneren Umfangsfläche des Verbindungsabschnitts an, so dass ein Druckfluid, das durch einen Fluiddurchgang des Körpers fließt, nicht nach außen lecken kann. Der Durchgang des zylindrisches Verbindungselement, durch den das Fluid fließen kann, weist einen Querschnitt auf, der gegenüber dem Fluiddurchgang des Körpers groß ist, wobei von Verbindungselement zu Körper eine sprunghafte Querschnittsänderung auftritt.

Bei den aus der WO 2007/121794 A1, der DE 100 05 870 A1 und der DE 10 2005 027 816 A1 bekannten Steckverbindern bestehen die oben beschriebenen Probleme von Steckverbindern, bei denen mindestens ein Anschlussbereich als Dorn ausgebildet ist, insbesondere die mit den im Hinblick auf den Anschluss von normierten Leitungen festgelegten Außendurchmessern verbundenen Probleme, nicht.

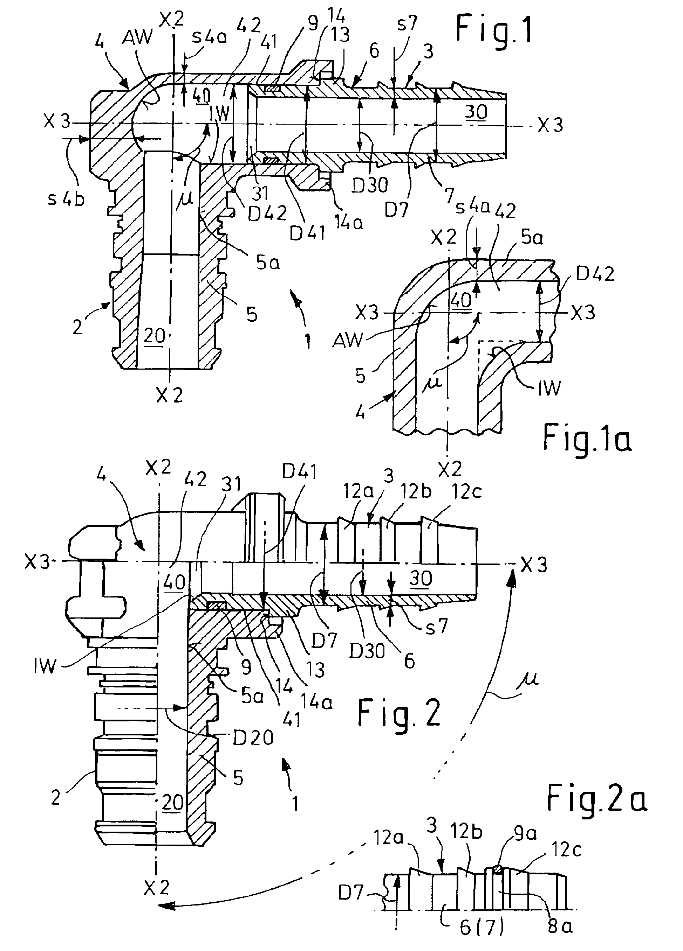

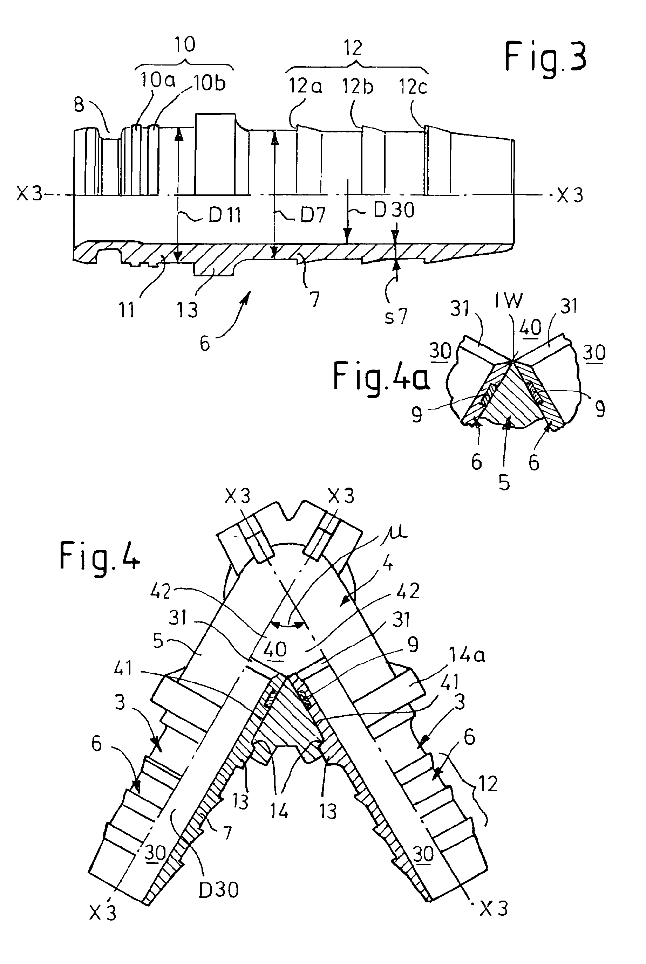

In der als gattungsbildend herangezogenen WO 96/17202 A1 ist ein bekannter Verbinder beschrieben, bei dem in einer Ausführung (Fig. 3) ein Kanalabschnitt eines Basisteils einen Innenquerschnitt aufweist, der nicht kleiner als der Innenquerschnitt des Strömungskanals des Dornteils ist. Sowohl das Basisteil, als auch das Dornteil bestehen dabei aus Kunststoff. In einer weiteren Ausführung (Fig. 2) bestehen das Steckerteil aus Metall und das Basisteil aus Kunststoff. Das Steckerteil ist dabei allerdings kein Dornteil. Der Innenquerschnitt des Kanalabschnitts des Basisteils ist kleiner als der Innenquerschnitt des Strömungskanals. Als bevorzugt einsetzbares Kunststoffmaterial zur Herstellung des Dorn- bzw. des Basisteils wird in der WO 96/17202 A1 dabei "Nylon" (Polyamid) beschrieben.

Der vorliegenden Erfindung liegt die Aufgabe zu Grunde, einen Verbinder der eingangs genannten Art zu schaffen, der bei technologisch und materialökonomisch günstiger Fertigung unter Einhaltung eines festgelegten Außendurchmessers für einen Leitungsanschluss und Gewährleistung einer geforderten Festigkeit für das im Betriebszustand mit einer Strömungsumleitung durchströmende Fluid eine optimale Strömungsausbildung und einen geringen Druckverlust sichert.

Erfindungsgemäß wird diese Aufgabe []durch einen Verbinder mit den Merkmalen des Anspruchs 1 gelöst. Hierbei ist vorgesehen, dass der Verbinder mindestens zwei aus unterschiedlichen Werkstoffen bestehende Teile umfasst, und zwar ein aus einem ersten Werkstoff (kunststoff) bestehendes Basisteil, das zumindest den Übergangsbereich bildet, und mindestens ein aus einem zweiten, mechanisch festeren Werkstoff (Metall) bestehendes, einen inneren Strömungskanal aufweisendes Dornteil, das mit einem Basisteil-Anschlussbereich in einen in einem Innenkanal des Basisteils gebildeten Aufnahmebereich umfangsgemäß abgedichtet einsteckbar ist und einen Schaft für den Leitungsanschluss aufweist, wobei ein sich im Übergangsbereich an den Aufnahmebereich des Innenkanals des Basisteils anschließender Kanalabschnitt des Basisteils einen Innenquerschnitt aufweist, der nicht kleiner als der Innenquerschnitt des Strömungskanals des Dornteils ist. Insofern in dem erfindungsgemäßen Verbinder zwei Anschlussbereiche derart zueinander angeordnet sind, dass sie hinsichtlich eines durch die Längsachsen ihrer Innenkanäle gebildeten Winkels von einem gestreckten Winkel abweichen, handelt es sich dabei um einen Winkelverbinder.

Erfindungsgemäß ist somit vorteilhafterweise ein - im Vergleich zu einem vollständig aus Metall bestehenden Verbinder - aufwandsarm herstellbares Hybridbauteil geschaffen. Bei Einhaltung einer geforderten Festigkeit, insbesondere einer Knick- und Schlagsicherheit des Dornteils, wird durch die erfindungsgemäß aufeinander abgestimmten Querschnitte des sich an den Aufnahmebereich des Innenkanals des Basisteils anschließenden Kanalabschnitts des Basisteils und des Strömungskanals des Dornteils auch ein optimales Strömungsverhalten für das Fluid und ein geringer Druckverlust erreicht. Der Innenbereich des Verbinders "hinter" dem Dornteil sollte dabei bevorzugt einen größeren inneren Durchmesser bzw. größeren Querschnitt aufweisen als der Innendurchmesser bzw. Querschnitt des Domteils. Diese größere Öffnung stellt im Vergleich zu einem verengten oder gleichbleibenden Querschnitt im Übergangsbereich eine verbesserte Möglichkeit der strömungsoptimalen Gestaltung des Innenkanals des Übergangsbereichs dar.

Außerdem ist es trotz kleiner Gesamtabmessungen des erfindungsgemäßen Verbinders dadurch möglich, eine Werkzeugtechnik einzusetzen, bei der das Werkzeug nicht nur - wie in einfachster Form üblich - zwei einteilige Formkerne in Gestalt von einstückigen Längsschiebern aufweist, die zum Entformen axial aus den jeweiligen Endabschnitten des Innenkanals gezogen werden, wobei die Formkerne zum Formen des Übergangsabschnittes an ihren einander zugewandten Enden eine entsprechende Gestalt aufweisen.

Durch die optimal große Gestaltung des Innenkanals des Übergangsbereiches kann mit Vorteil auch eine Formkern-Anordnung aus zwei axial, in Verlaufsrichtung der Längsachsen der Endabschnitte des Innenkanals schieberartig beweglich geführten Längskernteilen zur Anwendung kommen, bei der jedes Längskernteil in Längsrichtung in zwei Schieberteile geteilt ist, und zwar - bezogen auf den Verbinderwinkel - in ein äußeres und ein inneres Schieberteil. Die inneren Schieberteile sind mit ihren einander zugewandten Enden zum Formen eines beispielsweise konvex verrundeten Innenwinkelbereiches des Winkelverbinders ausgebildet, wodurch mit Vorteil im Innenwinkelbereich die Ausbildung von scharfkantigen Konturen vermieden werden kann. Dem Innenkanal wird somit, zumindest im Übergangsabschnitt - im Längsschnitt gesehen - sowohl in einem Außenwinkelbereich, als auch in einem Innenwinkelbereich eine verrundete Innenkontur verliehen.

Der Innenquerschnitt des Strömungskanals des Dornteils kann sich auf den Querschnitt des Innenkanals des Basisteils hin stetig, insbesondere konisch, erweitern, wodurch die Ausbildung einer laminaren Strömung gefördert bzw. noch weiter stabilisiert wird.

Der erfindungsgemäße Verbinder kann - wie nachfolgend noch im Detail ausgeführt wird - insbesondere in montagetechnisch vorteilhafter Weise als "Einschlagdorn" für das Basisteil ausgebildet sein, wobei dazu auf dem äußeren Umfangsbereich des Schaftes eine Zahnung zur kraft- und formschlüssigen Befestigung des Dornteils im Aufnahmebereich des Basisteils ausgebildet sein kann.

Der Schaft des Dornteils des erfindungsgemäßen Verbinders kann mit Vorteil einen Außendurchmesser aufweisen, der genauso groß oder größer ist als der Außendurchmesser im Basisteil-Anschlussbereich des Dornteils. Dadurch ist es möglich, dass sich der Querschnitt des inneren Strömungskanals des Dornteils über seine Länge hinweg in Richtung auf den sich an den Aufnahmebereich des Innenkanals des Basisteils anschließenden Kanalabschnitt erweitert, wodurch das Strömungsverhalten des Fluids noch weiter verbessert wird.

Durch die erfindungsgemäße Gestaltung der Innenkanäle im Dornteil und im Basisteil des Verbinders wird auch die kritische Reynolds-Zahl $Re_{krit}$ bestimmt, wobei mit Vorteil Werte von über 1200, vorzugsweise von über 2500, erreicht werden.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:

Fig. 1    eine axial geschnittene Darstellung einer ersten Ausführung eines nicht erfindungsgemäßen Verbinders für Fluid-Leitungen und -Aggregate,

Fig. 1a    einen vergrößerten Ausschnitt aus Fig. 1, jedoch mit einer erfindungsgemäß modifizierten Ausführung des Übergangsbereiches, insbesondere des Innenkanals, des erfindungsgemäßen Verbinders,

Fig. 2    in einem axialen Halbschnitt, eine Darstellung einer zweiten Ausführung eines erfindungsgemäßen Verbinders,

Fig. 2a    einen Ausschnitt aus Fig. 2, jedoch mit einer modifizierten Ausführung des Schaftes des erfindungsgemäßen Verbinders.

Fig. 3   im axialen Halbschnitt, eine stärker vergrößerte Darstellung einer Ausführung eines Dornteils eines erfindungsgemäßen Verbinders.

Fig. 4   im axialen Halbschnitt, eine Darstellung einer dritten Ausführung eines erfindungsgemäßen Verbinders,

Fig. 4a   einen vergrößerten Ausschnitt aus Fig. 4,

Fig. 5   im axialen Halbschnitt, eine Darstellung einer vierten Ausführung eines Verbinders, jedoch nicht erfindungsgemäß,

Fig. 6   eine axial geschnittene Darstellung einer Ausführung eines Basisteils eines nicht erfindungsgemäßen Verbinders,

Fig. 7   eine axial geschnittene Darstellung einer weiteren Ausführung eines Basisteils eines nicht erfindungsgemäßen Verbinders,

Fig. 8   eine axial geschnittene Darstellung einer fünften Ausführung eines erfindungsgemäßen Verbinders,

Fig. 8a   ein Detail aus Fig. 8 in einer ersten Modifikation,

Fig. 8b   ein Detail aus Fig. 8 in einer zweiten Modifikation,

Fig. 9   eine radial im Bereich der Schnittebene IX-IX geschnittene Darstellung der fünften Ausführung eines erfindungsgemäßen Verbinders.

Fig. 10   eine axial geschnittene Darstellung eines Details einer sechsten Ausführung eines erfindungsgemäßen Verbinders.

In den verschiedenen Figuren der Zeichnung sind gleiche Teile stets mit den gleichen Bezugszeichen versehen, so dass sie in der Regel auch nur einmal beschrieben werden.

Wie zunächst aus den zeichnerischen Darstellungen in Fig. 1 bis 2 zu ersehen ist, weist ein erfindungsgemäßer Verbinder 1 für Fluid-Leitungen und -Aggregate mindestens zwei - im dargestellten Fall genau zwei - Anschlussbereiche 2, 3 für Rohr- oder Schlauchleitungen und einen Übergangsbereich 4 zwischen den Anschlussbereichen 2, 3 auf. Jeder Anschlussbereich 2, 3 und der Übergangsbereich 4 ist jeweils von einem Innenkanal durchsetzt. Die Innenkanäle sind in den Anschlussbereichen 2, 3 mit den Bezugszeichen 20 und 30 und im Übergangsbereich mit dem Bezugszeichen 40 bezeichnet. Sie bilden zusammen einen durchgehenden, den Verbinder 1 durchsetzenden Kanal 20-40-30. Mindestens ein - im dargestellten Fall genau ein - Anschlussbereich 3 ist als Dom ausgebildet.

Die in Fig. 1 bis 2 dargestellten erfindungsgemäßen Verbinder 1 weisen mindestens zwei - in der Darstellung genau zwei - aus unterschiedlichen Werkstoffen bestehende Teile 5, 6 auf, und zwar ein aus einem ersten Werkstoff bestehendes Basisteil 5, das zumindest den Übergangsbereich 4 bildet, und mindestens ein aus einem zweiten, mechanisch festeren Werkstoff bestehendes, einen inneren Strömungskanal 30 aufweisendes Dornteil 6, das mit einem Schaft 7 in einen in einem Innenkanal 40 des Basisteils 5 gebildeten Aufnahmebereich 41 umfangsgemäß abgedichtet einsteckbar ist.

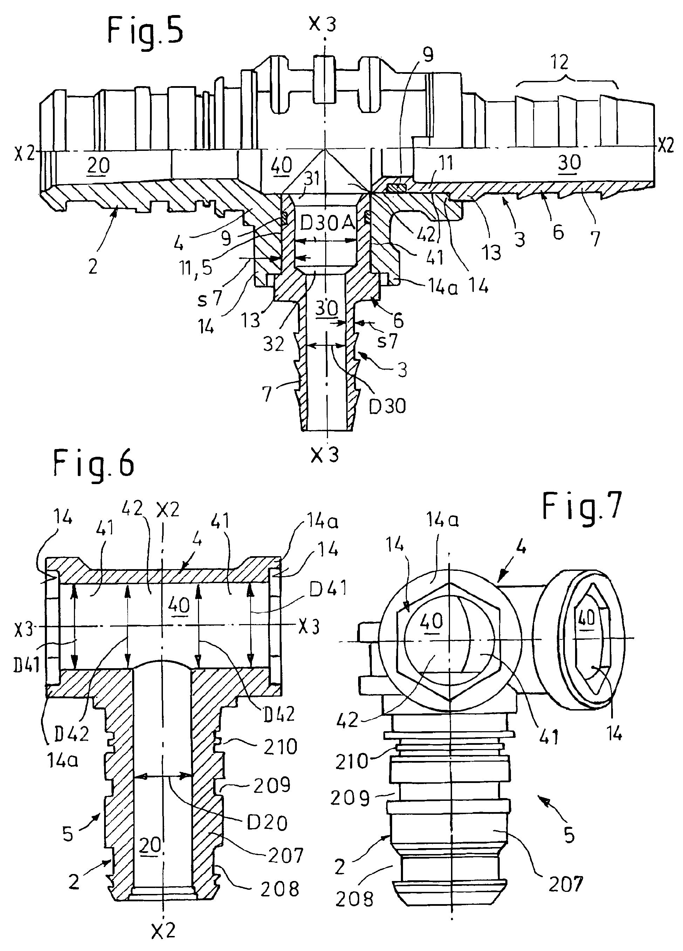

Der innere Strömungskanal 30 des Dornteils 6 ist dabei identisch mit dem Innenkanal 30, der den Anschlussbereich 3 durchsetzt. Das aus dem ersten Werkstoff bestehende Basisteil 5 bildet in der dargestellten Ausführung nicht nur den Übergangsbereich 4, sondern auch den Anschlussbereich 2, der nicht als Dom ausgebildet ist. Der detaillierte konstruktive Aufbau eines solchen, hier nur exemplarisch dargestellten Anschlussbereiches 2 ist nachfolgend noch unter Bezugnahme auf Fig. 6 und 7 erläutert.

Das Basisteil 5 besteht aus Kunststoff, vorzugsweise aus Polyamid. Es kann in materialökonomischer Weise als einstückiges Kunststoff-Spritzgussteil aus einem relativ starren, formstabilen Kunststoff hergestellt werden, beispielsweise aus einem faserverstärkten Polyamid, wie PA 6.6 mit einem Glas-Faseranteil GF 30 oder GF 35 oder einem entsprechenden Kohlefaseranteil (CF-Anteil).

Das Dornteil 7 besteht aus einem festeren Werkstoff als das Basisteil 5, und zwar aus Metall, insbesondere aus Messing. Auf das Dornteil 7 kann insbesondere eine schlauchartige Leitung aufgezogen, aber auch ein Rohr aufgepresst werden. Entsprechend der geometrischen Dimensionierung der anzuschließenden Leitung, wie z. B. der Nennweite, ist dabei das äußere Dornprofil, insbesondere ein Außendurchmesser D7 des Schaftes 7 des Dornteils 6, festgelegt. Durch die Werkstoffauswahl und die geforderte Festigkeit wird eine (Mindest-)Wandstärke s7 des Schaftes 7 bestimmt. Diese ist vorteilhafterweise kleiner als bei einem Kunststoffwerkstoff, so dass sich bei gleicher Nennweite ein größerer innerer Querschnitt des Dornteils 6 ergibt als bei einem Kunststoffdorn.

Außerdem besteht im Vergleich zu einem Kunststoffdom ein weiterer Vorteil auch darin, dass bei der spanenden, insbesondere drehenden, Bearbeitung des metallischen Dornteils 6 auf dem Außenumfang kein in axialer Richtung verlaufender - das spätere Dichtungsverhalten ungünstig beeinflussender oder durch einen zusätzlichen Arbeitsgang zu entfernender - Trenngrat entsteht, wie dies beim Spritzgießen eines Kunststoffteiles durch die Verwendung von zwei Formhalbschalen der Fall ist. Dies ist besonders dann von Bedeutung, wenn auf dem Schaft 7 in einer Nut 8a noch eine zusätzliche Umfangsdichtung 9a vorgesehen werden soll, die den Schaft 7 gegenüber der anzuschließenden Leitung abdichtet, wie dies in Fig. 2a dargestellt ist. Vor allem bei kleinen Schnurstärken der Umfangsdichtung, die für einen erfindungsgemäßen Verbinder in der Größenordnung von etwa 1 mm liegen können, kann schon ein Trenngrat geringer Höhe das Dichtungsverhalten relativ stark beeinflussen.

Der innere Strömungskanal 30 und auch der Schaft 7 des Dornteils 6 weisen einen im Wesentlichen kreisförmigen Querschnitt auf, was durch die Angabe der Durchmesser D30 und D7 veranschaulicht ist. Der Querschnitt bzw. der Durchmesser D30 des inneren Strömungskanals 30 des Dornteils 6 ist über nahezu seine gesamte Länge konstant. Nur in einem inneren Endstück 31 erweitert er sich über seine Länge hinweg konisch in Richtung auf einen sich an den Aufnahmebereich 41 des Innenkanals 40 des Basisteils 5 anschließenden Kanalabschnitt 42.

Dieser sich im Übergangsbereich 4 an den Aufnahmebereich 41 des Innenkanals 40 des Basisteils 5 anschließende Kanalabschnitt 42 des Basisteils 5 weist einen Innenquerschnitt auf, der nicht kleiner als der Innenquerschnitt des Strömungskanals 30 des Dornteils 6 ist. In der Darstellung gemäß Fig. 1 weist der Innenkanal 40 des Basisteils 5 in seinem Aufnahmebereich 41 und auch in seinem sich an den Aufnahmebereich anschließenden Kanalabschnitt 42 wiederum einen kreisförmigen Querschnitt auf, was durch die Angabe der Durchmesser D41 und D42 veranschaulicht ist.

Der Durchmesser D41 im Aufnahmebereich 41 ist genauso groß wie der Durchmesser D42 in dem sich an den Aufnahmebereich 41 anschließenden Kanalabschnitt 42 und auch - bis auf einen Toleranzunterschied zu Herstellung einer Passung - genauso groß wie der Außendurchmesser D7 des Schaftes 7 des Dornteils 6. Folglich weist der sich im Übergangsbereich 4 an den Aufnahmebereich 41 anschließende Kanalabschnitt 42 des Innenkanals 40 des Basisteils 5 einen Innenquerschnitt (Durchmesser D42) auf, der nicht kleiner - insbesondere größer - als der Außenquerschnitt (Durchmesser D7) des Dornteils 6 ist.

Bei den in Fig. 1 bis 2 dargestellten Ausführungen des erfindungsgemäßen Verbinders 1 ist dieser jeweils als Winkelverbinder ausgebildet, d. h. die beiden Anschlussbereiche 2, 3 sind derart zueinander angeordnet, dass sie hinsichtlich eines durch die jeweiligen Längsachsen X2-X2, X3-X3 ihrer Innenkanäle 20, 30 gebildeten Winkels μ von einem gestreckten Winkel (180°) abweichen und in einem Winkel von 90° zueinander stehen. Wie aus den weiteren Ausführungen noch zu ersehen ist, stellen bevorzugte Winkel μ solche von 30°, 60°, 90°, 120° und 150° dar. Bei Winkelverbindern ist die strömungsoptimale Ausbildung der Umlenkung im Übergangsbereich 4, erfindungsgemäß besonders vorteilhaft.

Aufgrund der Winkelausbildung des erfindungsgemäßen Verbinders 1 und aufgrund der Tatsache, dass die Innenkanäle 20, 30, 40 zusammen einen durchgehenden, den Verbinder 1 durchsetzenden Kanal 20-40-30 bilden, sind die Grenzen zwischen den Innenkanälen 20, 30, 40, wenn dort keine geometrischen Veränderungen, wie beispielsweise des Querschnitts vorgesehen sind, fließend.

Fig. 1a veranschaulicht, dass - wie bereits oben erwähnt - durch die erfindungsgemäß optimal große Gestaltung des Innenkanals 40 des Übergangsbereiches mit Vorteil bei der Herstellung des Basisteils 5 eine sogenannte Faltkern-Anordnung, nämlich eine Formkem-Anordnung mit zwei axial, in Verlaufsrichtung der Längsachsen X2-X2, X3-X3 des Innenkanals 20-40-30 schieberartig beweglich geführten Längskemteilen zur Anwendung kommen kann, bei der jedes Längskemteil in Längsrichtung X2-X2, X3-X3 in zwei Schieberteile geteilt ist, und zwar - bezogen auf den Verbinderwinkel μ - in ein äußeres und ein inneres Schieberteil. Die inneren Schieberteile sind mit ihren einander zugewandten Enden zum Formen eines beispielsweise konvex verrundeten Innenwinkelbereiches IW des Winkelverbinders ausgebildet, wodurch mit Vorteil im Innenwinkelbereich IW die Ausbildung von scharfkantigen Konturen - wie diese in Fig. 1 dargestellt sind - vermieden werden kann. Dem Innenkanal 20-40-30 kann somit, zumindest im Übergangsbereich 4 - im Längsschnitt gesehen - sowohl in einem Außenwinkelbereich AW, als auch in einem Innenwinkelbereich IW eine verrundete Innenkontur verliehen werden. Durch diese Kontur im Innenwinkelbereich IW - zum Vergleich ist als Strichlinie in Fig. 1a auch nochmals die Kontur der Ausführung aus Fig. 1 angedeutet - wird mit Vorteil ein Strömungsabriss des Fluids und ein Umschlagen einer laminaren in eine turbulente Strömung unterbunden.

Die Ausführungen des Verbinders 1 gemäß Fig. 1 und 2 unterscheiden sich dadurch, dass das Dornteil 6 in der Ausführung gemäß Fig. 2 weiter in axialer Richtung X3-X3 in das Basisteil 5 eingeschoben ist als in Fig. 1. Wie Fig. 2 zeigt, verläuft der Mündungsbereich des inneren Endstücks 31 fluchtend mit der im Winkel μ zum Dornteil 6 stehenden Wandung 5a des Basisteils 5, während in der Ausführung gemäß Fig. 1 ein Abstand zu dieser Wandung 5a besteht. Die vorteilhafte technische Bedeutung der in Fig. 2 gezeigten Ausführung wird nachstehend noch unter Bezugnahme auf Fig. 4a erläutert.

Dennoch trifft für die Ausführung des Verbinders 1 gemäß Fig. 2 das Gleiche zu wie für die erste Ausführung, nämlich dass der sich im Übergangsbereich 4 an den Aufnahmebereich 41 des Innenkanals 40 des Basisteils 5 anschließende Kanalabschnitt 42 des Basisteils 5 einen Innenquerschnitt aufweist, der nicht kleiner als der Innenquerschnitt des Strömungskanals 30 des Dornteils 6 ist. Ebenso ist zutreffend, dass der sich im Übergangsbereich 4 an den Aufnahmebereich 41 anschließende Kanalabschnitt 42 des Innenkanals 40 des Basisteils 5 einen Innenquerschnitt aufweist, der größer ist als der Außenquerschnitt des Dornteils 6. Dies gilt auch für die Ausführungen in Fig. 4, 5 (rechte Seite) und 8.

Eine Ausführung eines erfindungsgemäßen Dornteils 6 ist in vergrößerter Darstellung in Fig. 3 dargestellt. Hier ist insbesondere deutlicher als in Fig. 1 und 2 zu sehen, dass im äußeren Umfangsbereich des Schaftes 7 eine Nut 8 zur Aufnahme einer dem umfangsgemäß abgedichteten Einstecken des Dornteils 6 in das Basisteil 5 dienenden Umfangsdichtung 9 verläuft. Bei dieser Umfangsdichtung 9 kann es sich insbesondere um einen aus einem Elastomer gefertigten O-Ring handeln.

Des Weiteren lässt Fig. 3 erkennen, dass auf dem äußeren Umfangsbereich des Schaftes eine Zahnung 10 zur kraft- und formschlüssigen Befestigung des Dornteils 6 im Aufnahmebereich 41 des Basisteils 5 ausgebildet ist. Die Zahnung 10 besteht aus zwei umfangsgemäß verlaufenden Zahnkanten 10a, 10b die widerhakenartig ausgebildet sind und sich nach einem Einschlagen des Dornteils 6 in das Basisteil 5 - insbesondere nach einer Beaufschlagung mit einem Betriebsdruck - in das weniger feste Material des Basisteils 5 eingraben und das Dornteil 6 darin verankern können. Eine äußere umfangsgemäße Haltemanschette oder dergleichen um das Basisteil 5 herum ist nicht zur Befestigung notwendig.

Der Schaft 7 der in Fig. 3 gezeigten Ausführung des Dornteils 6 eines erfindungsgemäßen Verbinders 1 weist einen Außendurchmesser auf, der genauso groß ist wie der Außendurchmesser D11 in einem Basisteil-Anschlussbereich 11 des Dornteils 6. Eine solche Gestaltung weisen die Dornteile 6 gemäß den Ausführungen in Fig. 1. 2 und 5 (rechts) auf.

Das Dornteil 6 weist im Weiteren - wie an sich bekannt - auch umfangsgemäß verlaufende Leitungs-Haltekanten 12a, 12b, 12c auf, die vom Schaft abstehen und ein Dornprofil 12 bilden.

Auf dem äußeren Umfangsbereich des Schaftes 7 des Dornteils 6 ist ein Dornanschlag 13 zur Anlage an einem korrespondierenden Anschlag 14 am Basisteil 5 ausgebildet. Der Dornanschlag 13 befindet sich außerhalb des strömungskanals 30 des Dornteils 6 in einem Bereich des Schaftes 7, der an den Basisteil-Anschlussbereich 11 des Dornteils 6 grenzt, und wird durch einen Anschlagflansch oder Ringkragen gebildet.

Alternativ ist es auch möglich den Dornanschlag 13 aus umfangsgemäß verteilten Einzelelementen zu bilden.

Der korrespondierende Anschlag 14 am Basisteil 5 ist in den dargestellten Ausführungen gemäß Fig. 1, 2, 4 und bis 7 eine radiale Ringfläche, die im Basisteil 5 ausgebildet und von einer Umfangswandung 14a umfasst ist, deren Außenkontur jedoch - wie Fig. 7 zeigt, wo eine Sechskantausbildung vorliegt- nicht unbedingt krelsförmig ausgebildet sein muss. Bei formangepasster äußerer Kontur des Dornanschlags 13 an die Umfangswandung 14a kann so eine Verdrehsicherung des Dornteils 6 gegenüber dem Basisteil 5 hergestellt werden. Durch die dargestellte Anschlaggestaltung, bei der der Anschlag 14 in einem gegenüber dem Schaft 7 vergrößerten Durchmesserbereich liegt und von der Umfangswandung 14a umfasst wird, erhält das Dornteil 6 im Basisteil 5 mit Vorteil eine hohe Kippsicherheit. was die Verbindung zwischen Dornteil 6 und Basisteil 5 stabilisiert.

Die in Fig. 4 dargestellte dritte Ausführung eines erfindungsgemäßen Verbinders 1 zeigt, dass bei zwei (oder mehr) vorhandenen Anschlussbereichen für Rohr- oder Schlauchleitungen auch alle Anschlussbereiche 30, derart ausgebildet sein können, dass in sie - wie vorstehend nur für einen Anschlussbereich 30 beschrieben - jeweils ein aus einem zweiten, mechanisch festeren Werkstoff bestehendes, einen inneren Strömungskanal 30 aufweisendes Dornteil 6 mit einem Schaft 7 in jeweils einen In einem Innenkanal 40 des Basisteils 5 gebildeten Aufnahmebereich 41 umfangsgemäß abgedichtet einsteckbar ist. Konkret ist in Fig. 4 ein Winkelverbinder dargestellt, bei dem die Längsachsen X3-X3, X3-X3 der Innenkanäle 30 in einem Winkel μ von 60° zueinander stehen.

Die in Fig. 4a dargestellte Einzelheit zeigt, dass bei dieser Ausführung des erfindungsgemäßen Verbinders 1 - wie auch in Fig. 2 dargestellt - der konisch ausgeführte Mündungsbereich des inneren Endstücks 31 fluchtend mit der im Winkel μ zum Dornteil 6 stehenden Wandung 5a des Basisteils 5 verläuft. Dadurch wird der spitze Winkel des Basisteils 5, der im Innenwinkelbereiches IW des Winkelverbinders vorliegt, strömungsmechanisch nicht wirksam und es liegt wiederum - ähnlich wie bei der Ausführung gemäß Fig. 1a - mit Vorteil im Innenwinkelbereich IW faktisch eine strömungsoptimale Kontur ohne scharfe Kanten vor, die wie auch in Fig. 2 als quasiverrundet" bezeichnet werden könnte.

Die in Fig. 5 gezeigte Darstellung einer vierten Ausführung eines nicht erfindungsgemäßen Verbinders 1 zeigt einen T-förmigen Verbinder 1. Auch hier sind zwei der drei vorhandenen Anschlussbereiche 20, 30 für Rohr- oder Schlauchleitungen derart ausgebildet, dass in sie jeweils ein aus einem zweiten, mechanisch festeren Werkstoff bestehendes, einen inneren Strömungskanal 30 aufweisendes Dornteil 6 mit einem Schaft 7 In jeweils einen in einem Innenkanal 40 des Basisteils 5 gebildeten Aufnahmebereich 41 umfangsgemäß abgedichtet einsteckbar ist Das rechts in der Darstellung gezeigte Dornteil 6 besitzt dabei einen nahezu identischen konstruktiven Aufbau wie die unter Bezugnahme auf Fig. 1 und 2 beschriebenen Dornteile 6. Seine in der Darstellung nicht bezeichnete Längsachse (Achse des Innenkanals 30) ist dabei identisch mit der des Anschlussbereiches 2 (Achse X2-X2 des Innenkanals 20), der aus dem Basisteil 5 gebildet ist.

Auch für das unten in der Fig. 5 dargestellte Dornteil 6 ist der konstruktive Aufbau grundsätzlich der gleiche wie bei den Dornteilen gemäß Fig. 1 und 2. Ein Unterschied besteht jedoch darin, dass der Querschnitt des inneren Strömungskanals 30 des Dornteils 6 nicht über nahezu seine gesamte Länge konstant ist, sondern sich bereits am Anfang des Aufnahmebereichs 41 in Richtung auf den sich an den Aufnahmebereich 41 des Innenkanals 40 des Basisteils 5 anschließenden Kanalabschnitt 42 relativ stark erweitert. Konkret ist ein Durchmesser D30A, den der Innenkanal 30 im Aufnahmebereich 41 annimmt, etwa 1,5 Mal so groß wie der Durchmesser D30 des Innenkanals 30 im Schaft 7. Dazwischen liegt ein sich konisch erweiternder Durchmesser-Angleichungsbereich 32. Durch diese Ausbildung der Durchmesser D30, D30A tritt ein strömungsberuhigender, die oben erwähnte Reynolds-Zahl Re des strömenden Fluids herabsetzender Effekt vorteilhafterweise bereits früher, nämlich im Dornteil 6 und nicht erst im Übergangsbereich 4, ein.

Bei vorgegebener Wandstärke s7, die im Basisteil-Anschlussbereich 11 des Dornteils 6 und im Schaft 7 des Dornteils unterschiedlich - beispielsweise, wie dargestellt, im Basisteil-Anschlussbereich 11 größer als im Schaft 7 - sein kann, weist der Basisteil-Anschlussbereich 11 des erfindungsgemäßen Verbinders 1 dabei auch - insbesondere im Gegensatz zur Darstellung in Fig- 3 - einen Außendurchmesser D11 auf, der größer ist als der Außendurchmesser D7 im Bereich des Schaftes 7 des Dornteils 6.

Fig. 6 und 7. die zwei exemplarische Ausführungen eines Basisteils 5 eines nicht erfindungsgemäßen Verbinders 1 zeigen, verdeutlichen zunächst, dass der Aufbau eines derartigen Basisteils 5 einfach ist und daher die Basisteile 5 in technologisch wenig aufwändiger Weise herstellbar sind.

Bei beiden Basisteilen 5 handelt es sich um solche, aus denen T-Verbinder herstellbar sind. In beiden Ausführungen sind die Querbalken des T dabei zur Aufnahme von Domteilen 6 konzipiert, wobei bei der Ausführung in Fig. 7 zusätzlich dort noch ein 90°-Winkelversatz vorgesehen ist. Der konstruktiv einfache Aufbau wird beispielsweise dadurch deutlich, dass die Innenkanäle 20, 40 der Basisteile 5 völlig hinterschneidungsfrei sind, obwohl ja dann vorgesehen sein kann, dass ein sich im Übsrgangsbereich 4 an den Aufnahmebereich 41 des Innenkanals des Basisteils 5 anschließender Kanalabschnitt 42 des Basisteils 5 einen Innenquerschnitt aufweist, der auch größer als der Innenquerschnitt des bzw. der Innenkanäle 30 des bzw. der Anschlussbereiche 3, konkret der Strömungskanäle 30 der in die Aufnahmebereiche 41 einzusetzenden Dornteile 6, ist. Der Innenkanal 20 (Durchmesser D20), aber insbesondere auch der Innenkanal 40 des Basisteils 5 ist in seinem jeweiligen Aufnahmebereich 41 (Durchmesser D41) und in seinem sich an den Aufnahmebereich 41 anschließenden Kanalabschnitt 42 (Durchmesser D42) querschnittsgleich, insbesondere durchmessergleich, ausgebildet.

In Fig. 6 und 7, aber auch in den Ausführungen der Erfindung gemäß Fig. 1, 2, 5 und 8 ist mindestens einer der Anschlussbereiche 2 für eine Rohr- oder Schlauchleitung, oder aber insbesondere für ein Aggregat, aus dem Basisteil 5 gebildet. Dieser Anschlussabschnitt 2 ist vorzugsweise als Bestandteil einer Fluid-Steckverbindung ausgebildet, und zwar insbesondere als ein Steckerschaft 207, der über Haltemittel vorzugsweise lösbar arretierbar in eine Aufnahmemuffe eines nicht dargestellten beliebigen Anschluss- oder Aggregateteils einsteckbar ist. Der Steckerschaft 207 weist dazu auf seinem äußeren Umfang eine radiale, insbesondere als umfangsgemäße Ringnut ausgebildete Ausnehmung 208 auf, die zum Eingriff eines innerhalb der Aufnahmemuffe gelagerten, radial elastischen Halteelementes dient. In axialem Anschluss daran ist eine weitere Ringnut 209 für eine nicht dargestellte Mediendichtung sowie vorzugsweise noch eine dritte zusätzliche Ringnut 210 für eine ebenfalls nicht dargestellte Schmutzdichtung vorgesehen. Der entsprechende, an sich bekannte Aufbau dieses Anschlussbereichs 2 ist nur in Fig. 6 und 7 durch Bezugszeichen gekennzeichnet.

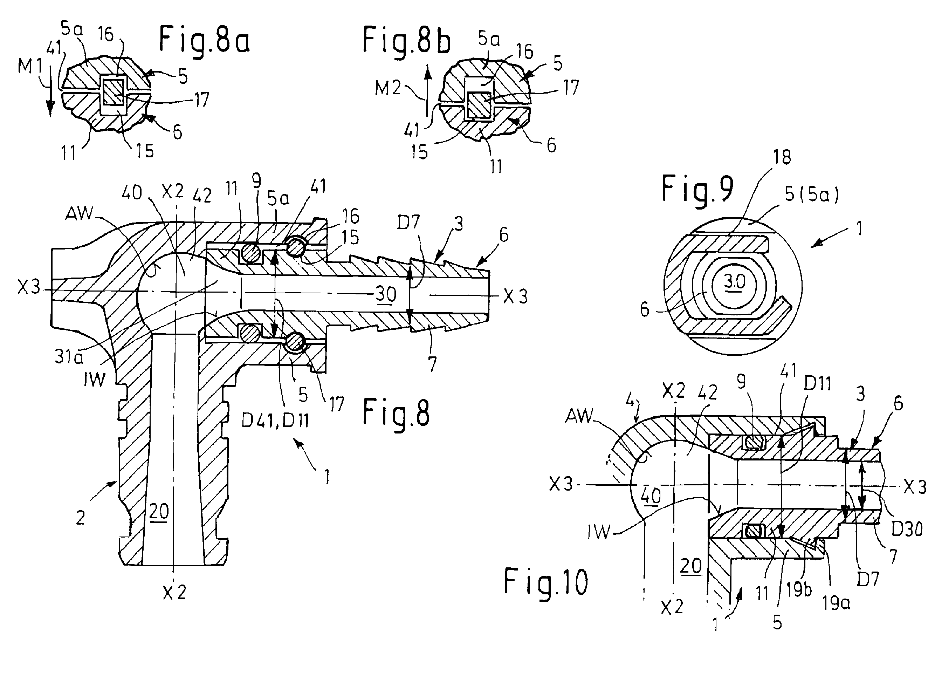

Bei den in Fig. 8 bis 10 in unterschiedlichen Schnittdarstellungen gezeigten weiteren Ausführungen eines erfindungsgemäßen Verbinders 1 unterscheidet sich insbesondere der Basisteil-Anschlussbereich 11 des Dornteils 6 des erfindungsgemäßen Verbinders 1 von den übrigen Ausführungen.

Zunächst ist in dem Dornteil 6 - ähnlich wie in der Darstellung des Dornteils 6 gemäß Fig. 5 unten - der Querschnitt des inneren Strömungskanals 30 nicht über nahezu seine gesamte Länge konstant, sondern beginnt sich etwa in der Mitte des Aufnahmebereichs 41 in Richtung auf den sich an den Aufnahmebereich 41 des Innenkanals 40 des Basisteils 5 anschließenden Kanalabschnitt 42 relativ stark konisch aufzuweiten. Dieser Aufweitungsbereich 31a ist daher mit dem Mündungsbereich des inneren Endstücks 31 vergleichbar, nur ist er länger. Auch hier wird ein strömungsberuhigender, eine laminare Strömung stabilisierender und die Reynolds-Zahl des strömenden Fluids herabsetzender Effekt vorteilhafterweise bereits im Dornteil 6 erreicht.

Ebenfalls ähnlich wie in der Darstellung des Dornteils 6 gemäß Fig. 5 unten ist bei der fünften Ausführung der Erfindung vorgesehen, dass der Basisteil-Anschlussbereich 11 des Dornteils 6 einen Außendurchmesser D11 aufweist, der größer ist als der Außendurchmesser D7 im Bereich des Schaftes 7 des Dornteils 6. Dadurch wird - ähnlich wie durch den äußeren Anschlag 14 - die Kippsicherheit des Dornteils 6 im Basisteil 5 erhöht.

Ein wichtiger Unterschied in den Ausführungen des Dornteils 6 gemäß der fünften und sechsten Ausführung der Erfindung besteht jedoch darin, dass diese für eine andere Art der Verbindung mit dem Basisteil 5 konzipiert sind. Hier ist keine Zahnung 10 auf dem äußeren Umfangsbereich des Schaftes 7 vorgesehen, und auch einen Anschlag 13 weist das Dornteil 6 nicht auf. Statt dessen befindet sich im Basisteil-Anschlussbereich 11 des Dornteils 6 eine Nut 15, der im Montagezustand eine im Basisteil 5 ausgebildete Nut 16 gegenüber steht. In den durch die beiden Nuten 15, 16 gebildeten Raum kann ein Halteelement 17 eingebracht werden, über das eine im Wesentlichen formschlüssig wirkende Verbindung hergestellt werden kann. Das Dornteil 6 bleibt damit im Basisteil 5 drehbar, wobei allerdings bedarfsweise auch eine Verdrehsicherung vorgesehen werden kann.

Sowohl für die Ausführung der Nuten 15, 16, als auch für die Ausführung des Halteelementes 17 bestehen verschiedene Möglichkeiten.

So können beide Nuten 15 rein umfangsgemäß verlaufen, wobei das Halteelement 17 bereits vor einer Montage des Dornteils 6 im Basisteil 5 entweder - wie in Fig. 8a gezeigt - in der Nut 16 des Basisteils 5 oder - wie in Fig. 8b gezeigt - in der Nut 15 des Dornteils 6, vorzugsweise unverlierbar. integriert sein kann. Bei der Montage wird dann das Halteelement 17 elastisch in der Nut 16 des Basisteils 5 zusammen- und in die tiefer ausgeführte Nut 15 des Dornteils 6 gedrückt (Pfeil M1) bzw. in der Nut 15 des Dornteils 6 auseinander- und in die tiefer ausgeführte Nut 16 des Basisteils 5 gedrückt (Pfeil M2) und federt dann in seine Schließposition zurück.

Eine andere Möglichkeit besteht darin, wie dies in Fig. 9 dargestellt ist, dass die Nuten 15, 16 - zumindest aber die Nut 16 im Basisteil 5 - tangential zum Durchmesser D11 des Dornteils 6 verlaufen, wobei auch die Wandung 5a des Basisteils 5 durchdrungen wird, so dass das Halteelement, 17 bei dem es sich in der gezeigten Darstellung exemplarisch um einen U-förmig gebogenen Draht handelt, zur formschlüssigen Befestigung des Dornteils 6 im Aufnahmebereich des Basisteils 5 von außen durch die Durchdringung 18 geführt werden kann. Dornteil 6 und Basisteil 5 sind somit vorteilhafterweise von außen montierbar bzw. gegebenenfalls demontierbar.

Eine weitere alternative Befestigungsmöglichkeit für das Dornteil 6 im Basisteil 5 besteht darin, die beiden Teile miteinander zu verrasten, wie dies beispielhaft in Fig. 10 dargestellt ist. Hierzu sind am Eingang in den Aufnahmebereich 41 des Innenkanals 40 des Basisteils 5 und auf dem Schaft 7 des Dornteils 6 Paare von einander komplementäre Rastelemente 19a. 19b vorzusehen. Vorzugsweise können zur Vermeidung ungleichmäßiger Belastungen durch eine Druckbeaufschlagung im Betriebszustand über den Umfang verteilt auch zwei oder mehr, vorzugsweise drei um 120° gegeneinander versetzte Rastelementpaare 19a, 19b, vorhanden sein.

Die Erfindung gestattet, mittels nur weniger Bauteile - Basisteilen 5 und Domteilen 6 - im Sinne eines Baukastensystems eine Vielzahl von Verbindern 1 herzustellen. Mit fünf Basisteilen 5 und sieben Einsatzteilen, die nicht nur Dornteile 6, sondern auch andere gleichermaßen in ein Basisteil 5 einsetzbare Bauteile, wie beispielsweise Prüfanschlüsse, umfassen können, können etwa 70 verschiedene Ausführungen von erfindungsgemäßen Verbindern 1 gestaltet werden, was einen enormen fertigungstechnischen Vorteil darstellt.

Was die Gestaltung der Wandstärken des Basisteils 5 im Übergangsbereich 4 betrifft, so wird hier beispielhaft auf Fig. 1 verwiesen. In der zeichnerischen Darstellung sind zwei unterschiedliche Wandstärkenbereiche mit den Bezugszeichen s4a und s4b gekennzeichnet. Die kleinere Wandstärke s4a ist - obwohl das Basisteil 5 aus dem weniger festen Werkstoff gebildet ist - etwa nur genauso groß wie die Wandstärke s7 im Schaftbereich des Dornteils 6, was damit verbunden ist, dass der Querschnitt des Innenkanals 40 in strömungsmechanisch günstiger Weise im Übergangsbereich 4 größer als der Querschnitt des inneren Strömungskanals 30 des Dornteils 6 ist. Eine solche geringe Wandstärke s4a ist an dieser Stelle möglich, weil der erfindungsgemäße Verbinder dort weniger stark mechanisch belastet ist. Da Jedoch der Übergangsbereich 4 von seinen Außenabmaßen her nicht durch die Nennweite einer anzuschließenden Leitung limitiert ist, steht es dem Fachmann frei, die Wandstärke in diesem Bereich zu variieren, wie dies durch die ebenfalls im Übergangsbereich 4 gekennzeichnete größere Wandstärke s4b veranschaulicht wird.

Die Querschnitte der Innenkanäle 20, 30, 40 müssen nicht kreisförmig sein; sie könnten auch elliptisch, rechteckig oder polygonal ausgeführt sein, ohne dass der Rahmen der Erfindung verlassen wird.

Des Weiteren kann der Fachmann zusätzliche vorteilhafte technische Maßnahmen vorsehen, ohne dass der Rahmen der Erfindung verlassen wird, wie beispielsweise - wie vorstehend erwähnt - bedarfsweise Prüf- oder Schraubanschlüsse in die zur Aufnahme der Dornteile 6 bestimmten Aufnahmebereiche 41 einzusetzen, oder wie in Fig. 1 gezeigt, den Innenkanal 20 eines Anschlussbereiches 2 konisch zu gestalten.

**Bezugszeichen**

| | |
|---|---|
| 1 | Verbinder |
| 2 | Anschlussbereich von 1 |
| 3 | Anschlussbereich von 1 (erfindungsgemäß) |
| 4 | Übergangsbereich zwischen 2 und 3 oder 3 und 3 |
| 5 | Basisteil von 1 |
| 5a | Wandung von 5 |
| 6 | Dornteil von 1 |
| 7 | Schaft von 6 |
| 8 | Nut für 9 in 11 |
| 8a | Nut für 9a in 7 |

(fortgesetzt)

| | | |
|---|---|---|
| 9 | Umfangsdichtung |
| 10 | Zahnung auf 6 (11) |
| 10a, 10b | Zahnkanten von 10 |
| 11 | Basisteil-Anschlussbereich von 6 |
| 12 | Dornprofil |
| 12a, 12b, 12c | Leitungs-Haltekanten von 12 |
| 13 | Dornanschlag von 6 |
| 14 | Anschlag von 5 für 13 |
| 14a | Umfangswandung um 14 |
| 15 | Nut in 6 (11) für 17 |
| 16 | Nut in 5 (41) für 17 |
| 17 | Halteelement |
| 18 | Durchdringung in 5a |
| 19a, 19b | komplementäre Rastelemente von 5 und 6 |
| 20 | Innenkanal in 2 |
| 30 | Innenkanal in 3, innerer Strömungskanal von 6 |
| 31 | Endstück von 30 |
| 31a | Aufweitungsbereich von 30 (Fig. 8) |
| 32 | Durchmesser-Angleichungsbereich zwischen D30 und D30A (Fig. 5) |
| 40 | Innenkanal in 4 |
| 41 | Aufnahmebereich von 40 für 6 |
| 42 | Kanalabschnitt von 40 neben 41 |
| | |
| 207 | Steckerschaft von 2 |
| 208 | Ausnehmung in 207 (erste Ringnut) |
| 209 | zweite Ringnut in 207 |
| 210 | dritte Ringnut in 207 |
| | |
| AW | Außenwinkelbereich von 40 |
| D7 | Durchmesser von 7 |
| D11 | Durchmesser von 11 |
| D20 | Durchmesser von 20 |
| D30 | Durchmesser von 30 |
| D30A | Durchmesser von 30 in 41 (Fig. 7) |
| D41 | Durchmesser von 41 |
| D42 | Durchmesser von 42 |
| IW | Innenwinkelbereich von 40 |
| M1 | anfängliche Montagebewegung von 17 (Fig. 8a) |
| M2 | anfängliche Montagebewegung von 17 (Fig. 8b) |
| s4a, s4b | Wandstärken von 5 in 4 |
| s7 | Wandstärke von 7 |
| X2-X2 | Längsachse von 2 bzw. 20 |
| X3-X3 | Längsachse von 3 bzw. 30 |
| | |
| μ | Winkel zwischen X2-X2 und X3-X3 |

## Patentansprüche

1. Verbinder (1) für Fluid-Leitungen und -Aggregate, mit mindestens zwei Anschlussbereichen (2, 3) für Rohr- oder Schlauchleitungen und mit einem Übergangsbereich (4) zwischen den Anschlussbereichen (2, 3), wobei jeder Anschlussbereich (2, 3) und der Übergangsbereich (4) jeweils von einem Innenkanal (20, 30, 40) durchsetzt ist und mindestens ein Anschlussbereich (3) als Dorn (6) ausgebildet ist, sowie mit mindestens zwei aus unterschiedlichen Werkstoffen bestehenden Teilen (5, 6), [] mit einem aus einem ersten Werkstoff, und zwar aus Kunststoff, bestehenden Basisteil (5), das zumindest den Übergangsbereich (4) bildet, und mit mindestens einem aus einem zweiten, mechanisch festeren Werkstoff, und zwar aus Metall, bestehenden, einen inneren Strömungskanal (30) aufweisenden Dornteil (6), das mit einem Basisteil-Anschlussbereich (11) in einen in einem Innenkanal (40) des Basisteils (5) gebildeten Aufnahmebereich (41) umfangsgemäß abgedichtet einsteckbar ist und einen Schaft (7) für den Leitungsanschluss aufweist, wobei ein sich im Übergangsbereich (4) an den Aufnahmebereich (41) des Innenkanals (40) des Basisteils (5) anschließender Kanalabschnitt (42) des Basisteils (5) einen Innenquerschnitt aufweist, der nicht kleiner als der Innenquerschnitt des Strömungskanals (30) des Dornteils (6) ist, **dadurch gekennzeichnet, dass** zwei Anschlussbereiche (20, 30) derart zueinander angeordnet sind, dass sie hinsichtlich eines durch die Längsachsen (X2-X2, X3-X3) ihrer Innenkanäle (20, 30) gebildeten Winkels ($\mu$) von einem gestreckten Winkel abweichen, wobei der Innenkanal (40) des Übergangsbereiches (4) im Längsschnitt gesehen in einem Außenwinkelbereich (AW) und in einem Innenwinkelbereich (IW) eine verrundete Innenkontur aufweist oder anstelle der verrundeten Innenkontur im Innenwinkelbereich (IW) der Querschnitt des inneren Strömungskanals (30) des Dornteils (6) über seine Länge hinweg in einem inneren Endstück (31) sich konisch in Richtung auf einen sich an den Aufnahmebereich (41) des Innenkanals (40) des Basisteils (5) anschließenden Kanalabschnitt (42) erweitert, wobei der Mündungsbereich des inneren Endstücks (31) fluchtend mit einer im Winkel ($\mu$) zum Dornteil (6) stehenden Wandung (5a) des Basisteils (5) verläuft.

2. Verbinder (1) nach Anspruch 1,
   **dadurch gekennzeichnet, dass** das Basisteil (5) aus Polyamid besteht.

3. Verbinder (1) nach Anspruch 1 oder 2,
   **dadurch gekennzeichnet,** dassdasDomteil(5)ausMessing besteht.

4. Verbinder (1) nach einem der Ansprüche 1 bis 3,
   **dadurch gekennzeichnet, dass** der innere Strömungskanal (30) und/oder der Schaft (7) des Dornteils (6) einen kreisförmigen Querschnitt aufweist.

5. Verbinder (1) nach einem der Ansprüche 1 bis 4,
   **dadurch gekennzeichnet, dass** der Querschnitt des inneren Strömungskanals (30) des Dornteils (6) über seine gesamte Länge konstant ist oder sich - zumindest bereichsweise - in Richtung auf den sich an den Aufnahmebereich (41) des Innenkanals (40) des Basisteils (5) anschließenden Kanalabschnitt (42) über seine Länge hinweg erweitert.

6. Verbinder (1) nach einem der Ansprüche 1 bis 5,
   **dadurch gekennzeichnet, dass** der Innenkanal (40) des Basisteils (5) in seinem Aufnahmebereich (41) und/oder in seinem sich an den Aufnahmebereich (41) anschließenden Kanalabschnitt (42) einen etwa kreisförmigen Querschnitt aufweist.

7. Verbinder (1) nach einem der Ansprüche 1 bis 6,
   **dadurch gekennzeichnet, dass** der Innenkanal (40) des Basisteils (5) in seinem Aufnahmebereich (41) und in seinem sich an den Aufnahmebereich (41) anschließenden Kanalabschnitt (42) querschnittsgleich, insbesondere durchmessergleich**,** ausgebildet ist.

8. Verbinder (1) nach einem der Ansprüche 1 bis 7,
   **dadurch gekennzeichnet, dass** der Querschnitt des Innenkanals (40) des Basisteils (5) in seinem sich an den Aufnahmebereich (41) anschließenden Kanalabschnitt (42) größer als der Innenquerschnitt des Strömungskanals (40) des Dornteils (6) ist und sich vorzugsweise der Innenquerschnitt des Strömungskanals (30) des Dornteils (6) auf den Querschnitt des Innenkanals (40) des Basisteils hin stetig, insbesondere konisch, erweitert.

9. Verbinder (1) nach einem der Ansprüche 1 bis 8,
   **dadurch gekennzeichnet, dass** der Schaft (7) des Dornteils (6) einen Außendurchmesser (D7) aufweist, der genauso groß oder kleiner ist als der Außendurchmesser (D11) im Basisteil-Anschlussbereich (11) des Dornteils (6).

10. Verbinder (1) nach einem der Ansprüche 1 bis 9,
    **dadurch gekennzeichnet, dass** im äußeren Umfangsbereich des Schaftes (7) eine Nut (8) zur Aufnahme einer dem umfangsgemäß abgedichteten Einstecken des Dornteils (6) in das Basisteil (5) dienenden Umfangsdichtung (9) verläuft.

**11.** Verbinder (1) nach einem der Ansprüche 1 bis 10, **gekennzeichnet durch** zwei oder mehr Anschlussbereiche (30) für Rohr- oder Schlauchleitungen, in die jeweils ein aus dem zweiten Werkstoff bestehendes, einen inneren Strömungskanal aufweisendes Dornteil (6) mit einem Schaft (7) in jeweils einen in einem Innenkanal (40) des Basisteils (5) gebildeten Aufnahmebereich (41) umfangsgemäß abgedichtet einsteckbar ist.

**12.** Verbinder (1) nach einem der Ansprüche 1 bis 11, **dadurch. gekennzeichnet, dass** die beiden Anschlussbereiche (20, 30), die derart zueinander angeordnet sind, dass sie hinsichtlich eines durch die Längsachsen (X2-X2, X3-X3) ihrer Innenkanäle (20, 30) gebildeten Winkels (μ) von einem gestreckten Winkel abweichen, in einem Winkel (μ) von 30°, 60°, 90°, 120° oder 150° zueinander stehen.

**13.** Verbinder (1) nach einem der Ansprüche 1 bis 12, **dadurch gekennzeichnet, dass** mindestens einer der Anschlussbereiche (20) für eine Rohr- oder Schlauchleitung aus dem Basisteil (5) gebildet ist.

**14.** Verbinder (1) nach einem der Ansprüche 1 bis 13, **dadurch gekennzeichnet, dass** auf dem äußeren Umfangsbereich des Schaftes (7) des Dornteils (6) ein Dornanschlag (13) zur Anlage an einem korrespondierenden Anschlag (14) am Basisteil (5) ausgebildet ist.

**15.** Verbinder (1) nach einem der Ansprüche 1 bis 14, **dadurch gekennzeichnet, dass** auf dem äußeren Umfangsbereich des Dornteils (6), insbesondere im Basisteil-Anschlussbereich (11), eine Zahnung (10) zur kraft- und formschlüssigen Befestigung des Dornteils (6) im Aufnahmebereich (41) des Basisteils (5) ausgebildet.

**16.** Verbinder (1) nach einem der Ansprüche 1 bis 14, **dadurch gekennzeichnet, dass** auf dem äußeren Umfangsbereich des Dornteils (6), insbesondere im Basisteil-Anschlussbereich (11), eine Nut (15) ausgebildet ist, der im Montagezustand eine im Basisteil (5) ausgebildete Nut (16) gegenüber steht, wobei in den durch die beiden Nuten (15, 16) gebildeten Raum zur formschlüssigen Befestigung des Dornteils (6) im Aufnahmebereich des Basisteils (5) ein Halteelement (17) einführbar ist.


**Claims**

**1.** Connector (1) for fluid lines and fluid units, with at least two connection zones (2, 3) for pipe or hose lines and with a transition zone (4) between the connection zones (2, 3), each connection zone (2, 3) and the transition zone (4) being respectively passed through by an internal channel (20, 30, 40) and at least one connection zone (3) being designed as a spur (6), and also with at least two parts (5, 6) made of different materials, with a base part (5) which is made of a first material, i.e. plastic, and forms at least the transition zone (4), and with at least one spur part (6) which is made of a second mechanically stronger material, i.e. metal, and has an internal flow channel (30) and which with a base part connection zone (11) can be inserted in a circumferentially sealed manner into a receiving zone (41) formed in an internal channel (40) of the base part (5) and has a shank (7) for the line connection, a channel section (42) of the base part (5) which adjoins the receiving zone (41) of the internal channel (40) of the base part (5) in the transition zone (4) having an internal cross-section which is not smaller than the internal cross-section of the flow channel (30) of spur part (6), **characterized in that** two connection zones (20, 30) are arranged relative to each other such that they differ from a straight angle with regard to an angle (μ) formed by the longitudinal axes (X2-X2, X3-X3) of their internal channels (20, 30), the internal channel (40) of the transition zone (4) viewed in longitudinal section having an internal contour which is rounded in an outer angle zone (AW) and in an inner angle zone (IW) or, instead of the rounded internal contour, widening out conically in the inner angle zone (IW) of the cross-section of the internal flow channel (30) of the spur part (6), along its length in an inner end portion (31), towards a channel section (42) adjoining the receiving zone (41) of the internal channel (40) of the base part (5), the mouth zone of the inner end portion (31) extending flush with a wall (5a) of the base part (5) forming an angle (μ) with the spur part (6).

**2.** Connector (1) according to Claim 1, **characterized in that** the base part (5) is made of polyamide.

**3.** Connector (1) according to Claim 1 or 2, **characterized in that** the spur part (5) is made of brass.

4. Connector (1) according to Claims 1 to 3, **characterized in that** the internal flow channel (30) and/or the shank (7) of the spur part (6) has a circular cross-section.

5. Connector (1) according to one of Claims 1 to 4, **characterized in that** the cross-section of the internal flow channel (30) of the spur part (6) is constant over its entire length or widens out - at least in zones - along its length towards the channel section (42) adjoining the receiving zone (41) of the internal channel (40) of the base part (5).

6. Connector (1) according to one of Claims 1 to 5, **characterized in that** the internal channel (40) of the base part (5) has an approximately circular cross-section in its receiving zone (41) and/or in its channel section (42) adjoining the receiving zone (41).

7. Connector (1) according to one of Claims 1 to 6, **characterized in that** the internal channel (40) of the base part (5) is designed with an identical cross-section, in particular an identical diameter, in its receiving zone (41) and in its channel section (42) adjoining the receiving zone (41).

8. Connector (1) according to one of Claims 1 to 7, **characterized in that** the cross-section of the internal channel (40) of the base part (5) in its channel section (42) adjoining the receiving zone (41) is larger than the internal cross-section of the flow channel (40) of the spur part (6) and preferably the internal cross-section of the flow channel (30) of the spur part (6) widens out, in particular conically, in a constant manner towards the cross-section of the internal channel (40) of the base part.

9. Connector (1) according to one of Claims 1 to 8, **characterized in that** the shank (7) of the spur part (6) has an outer diameter (D7) which is precisely as large as or smaller than the outer diameter (D11) in the base part connection zone (11) of the spur part (6).

10. Connector (1) according to one of Claims 1 to 9, **characterized in that** a groove (8) for receiving a circumferential seal (9) serving for the circumferentially sealed insertion of the spur part (6) into the base part (5) extends in the outer circumferential zone of the shank (7).

11. Connector (1) according to one of Claims 1 to 10, **characterized by** two or more connection zones (30) for pipe or hose lines inside which a spur part (6), which has an internal flow channel and is made of the second material, with a shank (7) can be respectively inserted in a circumferentially sealed manner into a respective receiving zone (41) formed in an internal channel (40) of the base part (5).

12. Connector (1) according to one of Claims 1 to 11, **characterized in that** the two connection zones (20, 30) which are arranged relative to each other in such a way that they differ from a straight angle with regard to an angle ($\mu$) formed by the longitudinal axes (X2-X2, X3-X3) of their internal channels (20, 30), form an angle ($\mu$) of 30°, 60°, 90°, 120° or 150° with respect to each other.

13. Connector (1) according to one of Claims 1 to 12, **characterized in that** at least one of the connection zones (20) for a pipe or hose line is formed by the base part (5).

14. Connector (1) according to one of Claims 1 to 13, **characterized in that** a spur stop (13) for making contact against a corresponding stop (14) on the base part (5) is formed on the outer circumferential zone of the shank (7) of the spur part (6).

15. Connector (1) according to one of Claims 1 to 14, **characterized in that** a set of teeth (10) are formed on the outer circumferential zone of the spur part (6), in particular in the base part connection zone (11), for securing the spur part (6) in a force-fitting and form-fitting manner in the receiving zone (41) of the base part (5).

16. Connector (1) according to one of Claims 1 to 14, **characterized in that** a groove (15) is formed on the outer circumferential zone of the spur part (6), in particular in the base part connection zone (11) and in the assembled condition is situated opposite a groove (16) formed in the base part (5), a retaining element (17) being able to be inserted into the spaced formed by the two grooves (15, 16) for securing the spur part (6) in a form-fitting manner in the receiving zone of the base part (5).

**Revendications**

1. Raccord (1) pour conduites et groupes fluidiques, avec au moins deux zones de raccordement (2, 3) pour des conduites rigides ou souples et avec une zone de transition (4) entre les zones de raccordement (2, 3), dans lequel chaque zone de raccordement (2, 3) et la zone de transition (4) sont traversées respectivement par un canal intérieur (20, 30, 40) et au moins une zone de raccordement (3) est réalisée sous la forme d'un mandrin (6), ainsi qu'avec au moins deux parties (5, 6) composées de différents matériaux, avec une partie de base (5) se composant d'un premier matériau, plus précisément de plastique qui forme au moins la zone de transition (4), et avec au moins une partie de mandrin (6) se composant d'un second matériau plus solide mécaniquement, plus précisément de métal, présentant un canal d'écoulement (30) intérieur, qui peut être enfiché de manière étanche sur la périphérie avec une zone de raccordement de partie de base (11) dans une zone de réception (41) formée dans un canal intérieur (40) de la partie de base (5) et présente une tige (7) pour le raccordement de conduite, dans lequel une section de canal (42) de la partie de base (5) contiguë dans la zone de transition (4) à la zone de réception (41) du canal intérieur (40) de la partie de base (5) présente une section transversale intérieure qui n'est pas inférieure à la section transversale intérieure du canal d'écoulement (30) de la partie de mandrin (6), **caractérisé en ce que** deux zones de raccordement (20, 30) sont disposées l'une par rapport à l'autre de telle manière qu'elles divergent en ce qui concerne un angle (μ) formé par les axes longitudinaux (X2-X2, X3-X3) de leurs canaux intérieurs (20, 30) selon un angle plan, le canal intérieur (40) de la zone de transition (4) présentant, vu en coupe longitudinale, dans une zone d'angle extérieur (AW) et dans une zone d'angle intérieur (IW) un contour intérieur arrondi ou de manière alternative au contour intérieur arrondi dans la zone d'angle intérieur (IW), la section transversale du canal d'écoulement intérieur (30) de la partie de mandrin (6) s'élargissant au-delà de sa longueur dans une pièce d'extrémité intérieure (31) présente une forme de cône en direction d'une section de canal (42) contiguë à la zone de réception (41) du canal intérieur (40) de la partie de base (5), la zone d'ouverture de la pièce d'extrémité intérieure (31) s'étendant en alignement avec une paroi (5a) en angle (μ) par rapport à la partie de mandrin (6) de la partie de base (5).

2. Raccord (1) selon la revendication 1,
   **caractérisé en ce que** la partie de base (5) se compose de polyamide.

3. Raccord (1) selon la revendication 1 ou 2,
   **caractérisé en ce que** la partie de mandrin (5) se compose de laiton.

4. Raccord (1) selon l'une quelconque des revendications 1 à 3,
   **caractérisé en ce que** le canal d'écoulement intérieur (30) et/ou la tige (7) de la partie de mandrin (6) présente une section transversale circulaire.

5. Raccord (1) selon l'une quelconque des revendications 1 à 4,
   **caractérisé en ce que** la section transversale du canal d'écoulement intérieur (30) de la partie de mandrin (6) est constante sur toute sa longueur ou s'élargit au moins par endroit en direction de la section de canal (42) contiguë à la zone de réception (41) du canal intérieur (40) de la partie de base (5) au-delà de sa longueur.

6. Raccord (1) selon l'une quelconque des revendications 1 à 5,
   **caractérisé en ce que** le canal intérieur (40) de la partie de base (5) présente dans sa zone de réception (41) et/ou dans sa section de canal (42) contiguë à la zone de réception (41) une section transversale approximativement circulaire.

7. Raccord (1) selon l'une quelconque des revendications 1 à 6,
   **caractérisé en ce que** le canal intérieur (40) de la partie de base (5) est réalisé dans sa zone de réception (41) et dans sa section de canal (42) contiguë à la zone de réception (41) avec une section transversale identique, en particulier un diamètre identique.

8. Raccord (1) selon l'une quelconque des revendications 1 à 7,
   **caractérisé en ce que** la section transversale du canal intérieur (40) de la partie de base (5) dans sa section de canal (42) contiguë à la zone de réception (41) est supérieure à la section transversale intérieure du canal d'écoulement (40) de la partie de mandrin (6) et la section transversale intérieure du canal d'écoulement (30) de la partie de mandrin (6) s'élargit de préférence vers la section transversale du canal intérieur (40) de la partie de base en continu, en particulier en forme de cône.

9. Raccord (1) selon l'une quelconque des revendications 1 à 8,
   **caractérisé en ce que** la tige (7) de la partie de mandrin (6) présente un diamètre extérieur (D7) qui est aussi grand ou plus petit que le diamètre extérieur (D11) dans la zone de raccordement de la partie de base (11) de la partie de mandrin (6).

10. Raccord (1) selon l'une quelconque des revendications 1 à 9,
    **caractérisé en ce qu'**une rainure (8) s'étend dans la zone périphérique extérieure de la tige (7) pour la réception d'une garniture périphérique (9) servant à l'enfichage étanche sur la périphérie de la partie de mandrin (6) dans la partie de base (5).

11. Raccord (1) selon l'une quelconque des revendications 1 à 10,
    **caractérisé par** deux ou plusieurs zones de raccordement (30) pour des conduites rigides ou souples, dans lesquelles une partie de mandrin (6) se composant du second matériau et présentant un canal d'écoulement intérieur avec une tige (7) peut être enfichée de manière étanche sur la périphérie dans respectivement une zone de réception (41) formée dans un canal intérieur (40) de la partie de base (5).

12. Raccord (1) selon l'une quelconque des revendications 1 à 11,
    **caractérisé en ce que** les deux zones de raccordement (20, 30) qui sont disposées l'une par rapport à l'autre de telle manière qu'elles divergent en ce qui concerne un angle ($\mu$) formé par les axes longitudinaux (X2-X2, X3-X3) de leurs canaux intérieurs (20, 30) selon un angle plan, forment un angle ($\mu$) de 30, 60, 90, 120 ou 150° l'une par rapport à l'autre.

13. Raccord (1) selon l'une quelconque des revendications 1 à 12,
    **caractérisé en ce qu'**au moins l'une des zones de raccordement (20) est formée pour une conduite rigide ou souple dans la partie de base (5).

14. Raccord (1) selon l'une quelconque des revendications 1 à 13,
    **caractérisé en ce qu'**une butée de mandrin (13) est réalisée sur la zone périphérique extérieure de la tige (7) de la partie de mandrin (6) pour l'appui contre une butée correspondante (14) sur la partie de base (5).

15. Raccord (1) selon l'une quelconque des revendications 1 à 14,
    **caractérisé en ce qu'**une denture (10) est réalisée pour la fixation par force et par complémentarité de forme de la partie de mandrin (6) dans la zone de réception (41) de la partie de base (5) sur la zone périphérique extérieure de la partie de mandrin (6), en particulier dans la zone de raccordement de la partie de base (11).

16. Raccord (1) selon l'une quelconque des revendications 1 à 14,
    **caractérisé en ce qu'**une rainure (15) est réalisée sur la zone périphérique extérieure de la partie de mandrin (6), en particulier dans la zone de raccordement de la partie de base (11), rainure (15) à laquelle est opposée à l'état de montage une rainure (16) réalisée dans la partie de base (5), un élément de retenue (17) pouvant être introduit dans l'espace formé par les deux rainures (15, 16) pour la fixation par complémentarité de formes de la partie de mandrin (6) dans la zone de réception de la partie de base (5).

Fig.1

Fig.1a

Fig.2

Fig.2a

Fig.3

Fig.4a

Fig.4

Fig.5

Fig.6

Fig.7

Fig.9

Fig.8b

Fig.8a

Fig.8

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007046712 A1
- EP O005865 B1
- WO 2007121794 A1
- DE 10005870 A1
- DE 102005027816 A1
- WO 9617202 A1